# EUROPEAN PATENT SPECIFICATION

(11) **EP 3 632 204 B1**
(45) Date of publication and mention of the grant of the patent: **05.01.2022**
(21) Application number: 18198858.5
(22) Date of filing: 05.10.2018
(51) Int. Cl.: A01K 43/00, A01K 41/00, A01K 41/06

(54) **DEVICE FOR TRANSPORTING AND HATCHING EGGS ON FARM BREEDING**
VORRICHTUNG ZUM TRANSPORTIEREN UND BRÜTEN VON EIERN IN DER LANDWIRTSCHAFTLICHEN ZUCHT
DISPOSITIF DE TRANSPORT ET D'ÉCLOSION D'OEUFS D'ÉLEVAGE À LA FERME

(43) Date of publication of application: 08.04.2020
(73) Proprietor: Societa' Agricola la Pellegrina S.p.A., 37034 Quinto di Valpantena Verona (IT)
(72) Inventor: DE RAMUNO, Mario, 37034 Quinto di Valpantena (IT); BAROSIO, Umberto, 37034 Quinto di Valpantena (IT); DE ZANE, Alberto, 37034 Quinto di Valpantena (IT); DALLA BARBA, Giulio, 37034 Quinto di Valpantena (IT); RAMINA, Flavio, 37034 Quinto di Valpantena (IT); MORANDINI, Emilio, 37034 Quinto di Valpantena (IT); FASOLATO, Luciano, 37034 Quinto di Valpantena (IT)
(74) Representative: Anselmi, Davide

(56) References cited:
- WO-A1-02/34039
- WO-A1-99/25184
- WO-A1-03/086060
- CA-A- 947 589
- US-A- 5 568 791

## Description

### Technical Field

The present invention relates to a device according to claim 1 for transporting and hatching eggs on a farm with the consequent birth of the chicks directly on the farm. In addition, the invention relates to a process according to claim 10 for transporting and hatching eggs on a farm, wherein the above-mentioned transporting and hatching device is used.

### State of the art

As described in the following documents of the prior art, US5568791, WO03/086060, WO02/34039, CA947589 and WO99/25184, the traditional egg hatching process envisages that the eggs arrive from breeding establishments in incubation trays of varying capacity according to the type of incubating machine to be used. The trays are stacked and conveyed to the incubating machine on trolleys.

The incubation stage usually lasts about 18 days, after which every tray is extracted from the incubation trolleys and the eggs are picked up in order to be transferred into hatching crates (different from the above-mentioned trays).

The crates are stacked and placed on other trolleys in order to be transferred to hatching machines (from around the 18th to the 21st day), preferably in an automated manner.

On the 21st day the birth of the chicks takes place and the crates are removed from the hatching machines, the shells are separated from the chicks and the latter are delivered to farms.

Alternatively, on the 18th day the eggs can be positioned directly in farming establishments so that the chicks are born already on the farm.

In the latter case, several different techniques are presently used, two of which are described below by way of example.

A first technique envisages that after incubation the eggs are placed back in a crate made of cardboard and suitable for being positioned directly on the ground, so that as soon as the chicks are born, they can feed in a chick rearing shed.

In this first technique, however, a series of steps is necessary, in which the eggs are transferred onto the crate, with a non-zero possibility of their integrity being compromised and possible consequences for production and/or quality.

A further drawback of this first known technique is tied to the fact that there is a great deal of "disposable" material, since the entire structure of the crate is positioned on the ground.

Moreover, this known technique also shows a reduced flexibility in the transfer between hatching on a farm and hatching in a hatchery.

Finally, this known technique requires adaptations and thus necessarily investments to make the hatchery suitable for operating with such crates.

A second known technique envisages the use of an automated system, in which the eggs, after incubation, are positioned on special trays placed on a guide suspended from the ground and mounted in the shed. In this manner, the guides can be adjusted in height to facilitate inspection of the eggs by operators; during egg hatching the trays are kept a few centimetres above the floor of the farming establishment, in which a layer of feed is distributed so that the newborn chicks can go down and eat. However, the trays must remain on the farm for the whole hatching period and can be recovered only at a later time for subsequent use. This leads to added logistical costs and an increase in biological risk and the risk of cross-contamination in the subsequent cycle.

In addition, the use of such an automated system requires a large investment in order to be able to adapt the entire shed used for egg hatching.

### Objects of the invention

In this context, the technical task at the basis of the present invention is to provide a device for transporting and hatching eggs on a farm that overcomes the drawbacks of the above-mentioned prior art.

A first object of the device is to considerably reduce the financial impact on the user, so that the device, not requiring major structural changes, may be easily integrated into any pre-existing system (transport, vaccination, etc.) in the various farming establishments and hatcheries, and so that the amount of disposable material is considerably limited.

A second object of the device for transporting and hatching eggs on a farm is to ensure high standards of biosafety during all stages of processing of hatching eggs.

In addition, the transporting and hatching device aims to ensure a lower health risk by reducing the handling of eggs that may occur during the various stages.

Another object of the present invention is to ensure a maximum level of chick welfare by:
- eliminating transport from the hatchery to the farm;
- feeding and watering the chicks from the first moment after birth, eliminating competition at the waterer; allowing the chicks to hatch on the ground;
- ensuring more space for the chicks during the moment of hatching and an environment with a larger volume in which contaminants can form only in small concentrations.

The stated technical task and specified purposes are substantially reached by a device for transporting and hatching eggs on a farm and a process for transporting and hatching eggs on a farm which comprise the technical features disclosed in the independent claims. The dependent claims correspond to further advantageous aspects of the invention.

It should be highlighted that this summary introduces, in simplified form, a selection of concepts that will be further elaborated in the detailed description given below.

The invention relates to a device for transporting and hatching eggs on a farm which comprises a transport container, preferably a tray, and a hatching substrate associated with the transport container. The hatching substrate is configurable between a transport condition, in which it is inserted in the transport container, and a hatching condition, in which it is separated from the transport container and is placed outside in a position independent of that of the transport container itself. Furthermore, the hatching substrate comprises an egg retaining means shaped so as to maintain the eggs arranged in the transporting and hatching device in a substantially stable position.

More precisely, the transporting and hatching device makes it possible to reduce the handling and transfer operations carried out on the eggs, since once the eggs are positioned on the hatching substrate they will remain there until the actual hatching. Any movements of the eggs from the incubator to the farm will take place with the hatching substrate positioned inside the transport container. The transport container is reusable from the moment in which the hatching substrate is positioned on the ground in the farming establishment in the days following unloading and preceding hatching.

Advantageously, transporting the eggs, as opposed to chicks, directly to the farm considerably increases logistical efficiency.

In addition, as is well known, positioning the hatching substrate on the ground enables the strengthening of the digestive and immune systems of chicks born directly on the farm. In other words, birth on the ground makes it possible to have more robust chicks.

The retaining means is preferably shaped so as to keep the eggs disposed in the transporting and hatching device in an at least partially horizontal position, with reference to a main axis of extension of the egg itself and relative to a vertical direction.

In this manner, each egg is kept in the horizontal position it would normally assume in nature, deriving benefits during the incubation process and greater stability during transport.

In addition, the hatching substrate is compatible with all automated systems normally used.

According to one aspect of the invention, the retaining means comprises a plurality of seats for housing the eggs, wherein each seat is defined at least in part by one or more partitions that rise directly from the hatching substrate.

In this manner, each egg is advantageously housed in a respective housing seat which protects it and keeps it in a stable position, preventing the possibility of the eggs knocking against each other and being damaged during transport.

Each housing seat preferably has a height less than a maximum diameter of an egg measured transversely to the main axis of extension of the egg itself. This particular conformation of the housing seats enables the eggs to lie on one side, assuming the horizontal position, which is the most advantageous, and prevents them from maintaining a substantially vertical "standing" position during their positioning on the hatching substrate. In other words, the conformation of the housing seats enables the eggs to lie naturally on one side in the most stable manner possible, irrespective of how they are positioned in the hatching substrate.

According to another aspect of the invention, the partitions are shaped so as to define housing seats that are closed off at the sides and substantially honeycomb shaped.

Alternatively, the partitions extend along the hatching substrate according to an undulating (corrugated) pattern to define housing seats that are open at the sides.

In any case, the egg retaining means and the housing seats can be made in other ways that are not expressly described here but are comprised in the retaining function.

According to the invention, the transport container comprises a lower base on which the hatching substrate may be positioned and at least one lateral wall transversal to the base. More specifically, the lateral wall surrounds the base of the transport container in such a way as to define a sort of tray.

The transport container has at least one lateral passage opening for moving the hatching substrate between the transport condition and the hatching condition.

In this manner, the presence of the lateral part enables a number of transport containers to be stacked one on top of the other, but simultaneously allows the hatching substrate to be extracted thanks to the presence of at least one lateral opening.

Even more preferably, the lateral passage opening is defined by a window fashioned in the lateral wall. Said window preferably has a lower side disposed at the level of the base to enable extraction by sliding the substrate through the window itself.

According to the invention, in order to impart greater robustness to the lateral wall of the transport container, the lateral opening fashioned is a simple passage window enabling the sliding of the hatching substrate between the transport position and the hatching position.

According to one aspect of the invention, the base has substantially a quadrilateral shape, preferably the shape of a rectangle.

Consequently, the collection container is a prism with a rectangular base having a reduced footprint.

According to another aspect of the invention, the hatching substrate comprises at least one containing panel disposed at least along a perimeter of the hatching substrate.

Advantageously, the presence of a containing panel along the perimeter of the hatching substrate imparts greater robustness to the latter and provides safety guards which prevent damage to the eggs.

The containing panel can preferably comprise a lower wall that extends below the hatching substrate in such a way as to contain the latter. It should be noted that the hatching substrate can be solidly connected to the containing panel, or else it can be only rested against it.

According to a further aspect of the invention, the hatching substrate or the containing panel comprises at least one handle to facilitate moving the hatching substrate itself between the transport condition and the hatching condition.

Advantageously, the handles of the hatching substrate are capable of facilitating movement of the hatching substrate itself between the transport position, inside the container, and the hatching position, outside the container.

The subject matter of the present invention further relates to a process for transporting and hatching eggs on a farm, which comprises the operating steps of:
- preparing the transport container as previously described;
- preparing the hatching substrate in a transport condition, wherein the hatching substrate is inserted in the transport container; the hatching substrate further comprises the retaining means shaped so as to keep the eggs arranged inside it in a substantially stable position;
- preparing a plurality of eggs in the hatching substrate configured in the transport condition so that each egg is kept in a stable position by the retaining means;
- transporting the hatching substrate in a transport condition to the farm for hatching of the eggs;
- configuring the hatching substrate in the hatching condition, wherein the hatching substrate is separated from the transport container and is placed outside and in a position independent of that of the transport container itself pending hatching.

According to one aspect of the invention, the process comprises a preliminary incubation step, wherein the eggs are prepared in an incubator for a predetermined time which precedes transport to the farm for hatching.

The process subsequently comprises a step of positioning the eggs in the respective hatching substrates (on the 18th day), each of which is then positioned inside the container (tray) in the transport condition so as then to be transported directly to the farm for hatching of the eggs. The transport of the containers preferably provides for the latter to be stacked upon one another and arranged in a transport trolley. Upon arriving at the farm, the hatching substrates of the containers (or stacked trays) can advantageously be extracted without unstacking the trays and are positioned on the ground.

Advantageously, the containers, without the substrate, which has been removed, can remain on the transport trolley so as to be easily recovered. Advantageously, once the eggs are positioned on the hatching substrate and the latter is configured in the transport position inside the container they are easily transported, always inside the same collection substrate and transport container throughout the whole processing thereof between the transfer step and the hatching step, so as to reduce the occurrence of possible problems.

### Brief description of the figures

Additional features and advantages of the present invention will emerge more clearly from the approximate, and thus non-limiting, description of a preferred but non-exclusive embodiment of a device for transporting and hatching eggs on a farm, as illustrated in the appended drawings, in which:
- figure 1 illustrates an axonometric view of a device for transporting and hatching eggs on a farm;
- figure 2 illustrates an axonometric view of the device in figure 1, in which the hatching substrate comprises containing panels and handles;
- figure 3 illustrates an axonometric view of the device illustrated in figure 2 during movement between the transport condition and hatching condition;
- figure 4 illustrates an axonometric view of the device illustrated in figures 2 and 3 in a hatching condition;
- figure 5a shows an axonometric view of an alternative embodiment of the device in figure 1;
- figure 5b shows a front axonometric view of an isolated detail of figure 5a.

With reference to the drawings, they serve solely to illustrate embodiments of the invention with the aim of better clarifying, in combination with the description, the inventive principles at the basis of the invention.

### Description of one or more preferred embodiments of the present invention

The present invention is aimed at a device for transporting and hatching eggs on a farm and a process for transporting and hatching eggs on a farm.

With reference to the figures, a transporting and hatching device has been generically indicated with the number 1. The other numerical references refer to technical features of the invention which, barring indications otherwise or clear structural incompatibilities, the person skilled in the art will know how to apply to all the variant embodiments described.

Any modifications or variants which, in the light of the description, are evident to the person skilled in the art, must be considered to fall within the scope of protection established by the present invention, according to considerations of technical equivalence.

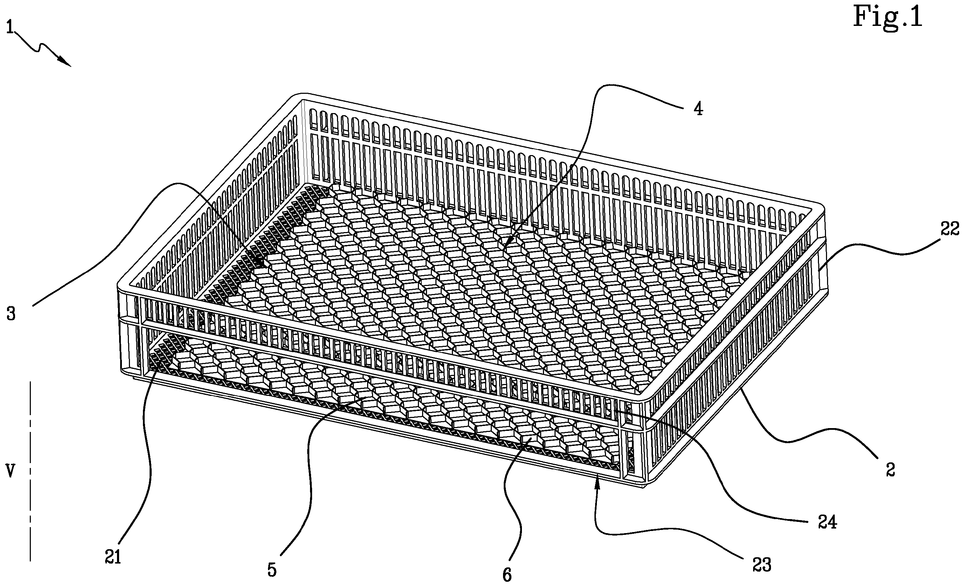

Figure 1 illustrates a device 1 for transporting and hatching eggs on a farm, which comprises a transport container 2 and a hatching substrate 3 positioned inside the transport container 2.

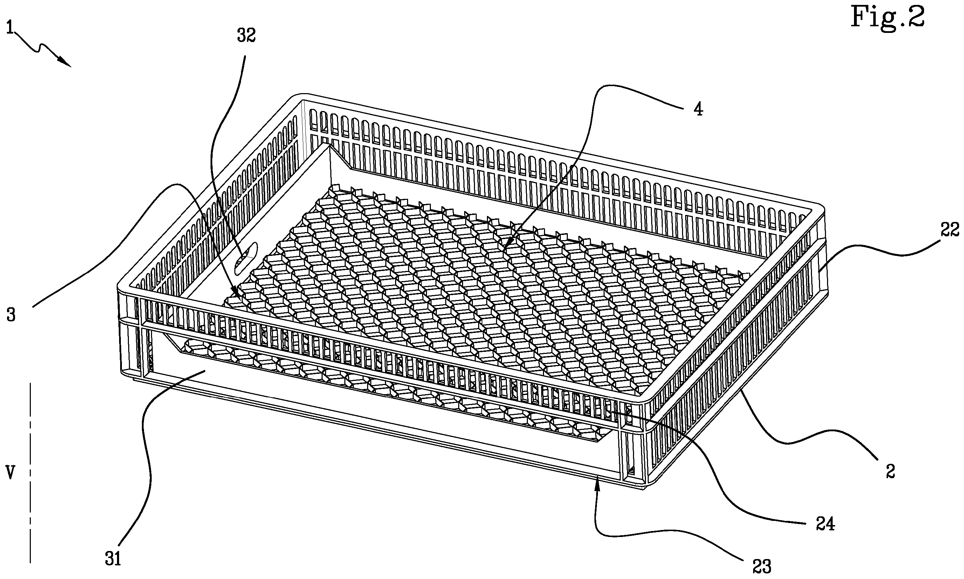

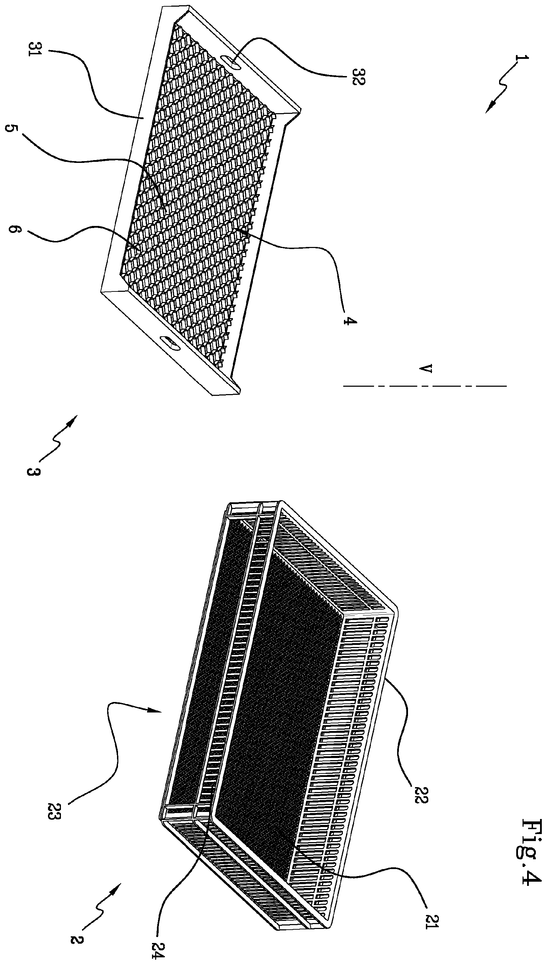

The hatching substrate 3 is configurable between a transport condition (figures 1 and 2), in which it is inserted in the transport container 2, and a hatching condition (figure 4), in which it is separated from the transport container 2 and is placed outside and in a position independent of that of the transport container 2.

The hatching substrate 3 preferably extends planarly and is placed on the bottom of the container 2 during the transport condition.

In addition, the hatching substrate 3 comprises an egg retaining means 4 shaped so as to keep the eggs arranged in the transport and hatching device 1 in a substantially stable position.

According to one aspect of the invention, the retaining means 4 is shaped so as to keep the eggs arranged in the transport and hatching device 1 in an at least partially horizontal position, i.e. in the same manner as they would be in nature. The horizontal position is defined with reference to a main axis of extension of the egg itself, inclined relative to a vertical direction V.

More specifically, therefore, the retaining means 4 comprises a plurality of housing seats 5 for the eggs, wherein each seat 5 is defined at least in part by one or more partitions 6 that rise directly from the hatching substrate 3.

In order to keep the eggs in a horizontal position, irrespective of how they are positioned within the hatching substrate 3, each housing seat 5, and more specifically the partition 6 which delimits it, has a height that is less than a maximum diameter of an egg, which is measured transversely to the main axis of extension of the egg itself.

In other words, the height of the partition 6 is such that an egg disposed "standing" inside it finds no lateral support and tends accordingly to rest lying at least partially on one side in the respective cell. While remaining in that substantially stable position the egg cannot collide with other eggs or with the wall of the transport container 2, thus being broken or damaged. As can be better seen in figures 1 and 2, the partitions 6 are preferably shaped so as to define closed housing seats 5, substantially honeycomb shaped.

Alternatively, the partitions 6 extend along the hatching substrate 3 according to an undulating pattern so as to define open housing seats 5.

In other words, according to this unillustrated embodiment, the partitions 6 are disposed along the hatching substrate 3 along a same longitudinal direction and parallel to one another. Given their undulating configuration, the partitions 6, in twos set side by side, form between them a plurality of housing seats 5 for the eggs.

According to an advantageous aspect of the invention, the hatching substrate 3 comprises a containing panel 31 that laterally surrounds the rest of the hatching substrate 3 and, preferably, also the bottom of said hatching substrate 3. The containing panel 31, better illustrated in figures 2, 3 and 4, has the function of lending structural rigidity to the hatching substrate and providing a lateral safety restraint to prevent the eggs from falling off the hatching substrate 3, or an accidental impact against the transport container 2, which would damage or even break them.

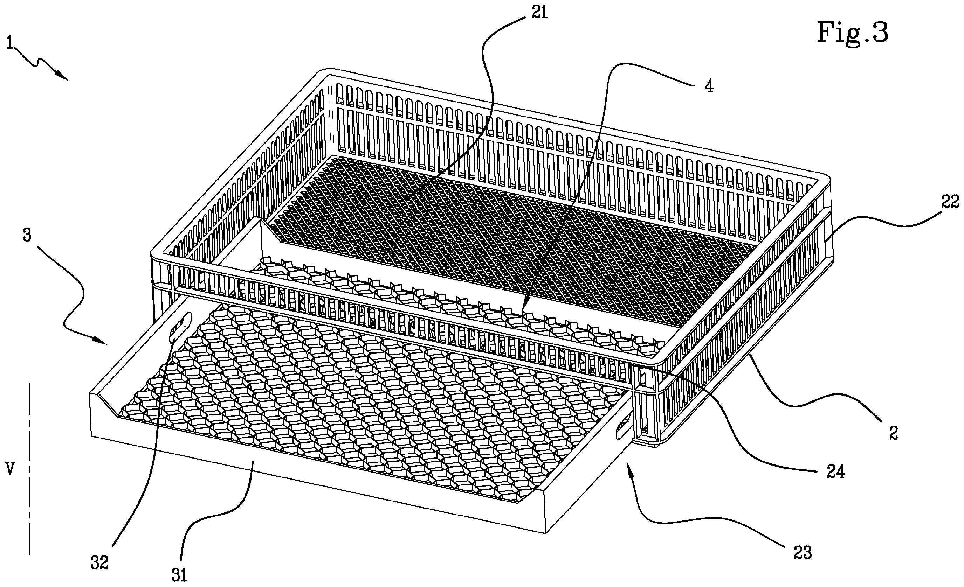

In addition, as can likewise be seen in figures 2, 3 and 4, the hatching substrate 3 comprises at least one handle 32 to facilitate movement of the hatching substrate 3 between the transport condition and the hatching condition, as represented in figure 3. In fact, the handle 32 permits maximum flexibility because, depending on need, the hatching substrate 3 can be extracted through the most convenient opening present on the transport container 2, as better described below.

The hatching substrate 3 is preferably made with an edible material, similar to a wafer, preferably enriched with all the nutrients necessary for chick development.

According to another aspect of the invention, the transport container 2 is an open top tray. The tray is preferably made of plastic, metallic or wood material.

The transport container 2 comprises a base 21 and at least one lateral wall 22 disposed connected transversely to the base 21 so as to at least surround it. The lateral wall 22 is disposed along the whole perimeter of the base 21.

Furthermore, the base 21, perforated to allow the passage of air, is suitable for supporting the hatching substrate 3 in a stable manner and without any risks of breakage or damage to the eggs.

The base 21 preferably has substantially a quadrilateral shape, preferably the shape of a rectangle.

In addition, the transport container 3 has at least one lateral passage opening 23 for moving the hatching substrate 3 at least between the transport condition and the hatching condition.

According to the invention, the lateral passage opening 23 is defined by a window fashioned in the lateral wall 22.

In other words, in order to facilitate the extraction of the hatching substrate 3 from the transport container 2, the lateral wall 22 has an opening 23 such as to enable the hatching substrate 3 positioned on the base 21 to slide from the transport position into the hatching position outside the transport container 2. The opening 23 is preferably fashioned at the base of the container 2.

According to a first embodiment shown in figures 1, 2, 3, 4, the opening 23 is fashioned only on one side of the lateral wall 22, in a partial manner so as to form a simple passage window. In the appended figures it is possible to see that above the passage window there is a cross member 24 which represents the remaining portion of the lateral wall 22. Advantageously, the cross member 24 defines at the top an edge that is continuous with the rest of the lateral walls 22 so as to define a more stable support for stacking a number of containers 2 one on top of the other.

However, the passage window can be fashioned on a different side of the lateral wall 22, or on more than one side of the lateral wall 22.

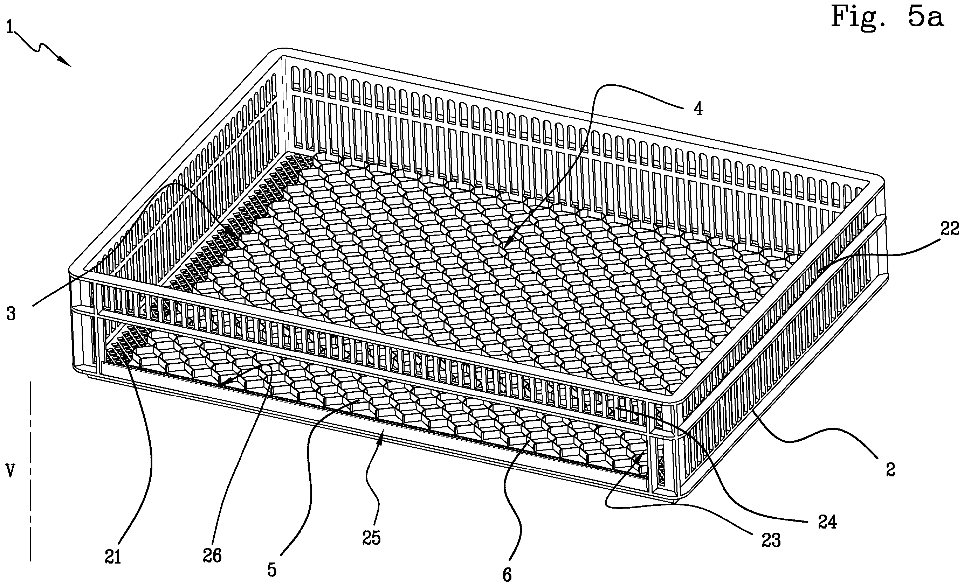

In the alternative embodiment illustrated in figure 5a, the transport container 2 comprises one or more retaining members 25 disposed at the opening 23 so as to retain the substrate 3 in the transport condition inside the container 2 and preventing it from coming out.

The retaining member 25 is preferably connected to the bottom of the container 2 and extends for a predefined height so as to define a sort of block for the substrate.

In figure 5a, the retaining member 25 has been represented in the form of a single bar extending for the entire width of the opening 23. However, there could be a number of retaining members 25 spaced from one another (for example disposed at the outer sides of the opening), or a raised edge of the corresponding side of the container 2.

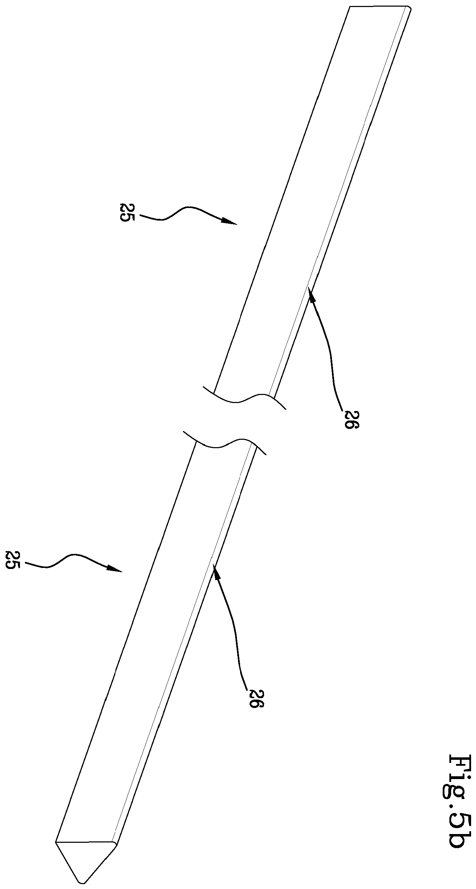

The retaining member 25 (which may be seen isolated in figure 5b) preferably has a face 26 turned towards the substrate 3 and shaped like a "slide" to facilitate the movement of the substrate 3 from the transport condition to the hatching condition. In other words, the face 26 shaped like a "slide" rises from the bottom of the container 2 and goes towards the outside of the container 2 itself for a predefined height, preferably equal to the height of the retaining member 25.

An embodiment of the retaining member 25 is represented in figure 5b, in which it is possible to see that it is shaped like a triangle according to a sectional plane orthogonal to the main direction of extension of the retaining member 25.

In any case, the retaining member 25 can be connected to the container 2 via specific connection means (glue, screws, ...) or made in one piece with the tray.

The subject matter of the present patent application also relates to a process for transporting and hatching eggs on a farm, wherein said process derives directly from what was described above, which is entirely referenced hereunder. The process comprises the operating steps of:
- preparing the transport container 2;
- preparing the hatching substrate 3 in the transport condition, wherein the hatching substrate 3 is inserted in the transport container 2 and, in addition, the hatching substrate 3 comprises the retaining means 4 shaped so as to keep the eggs arranged inside it in a substantially stable position;

- preparing a plurality of eggs in the hatching substrate 3 configured in the transport condition so that each egg is kept in a stable position by the retaining means 4;
- transporting the hatching substrate 3 in the transport condition to a farm for hatching of the eggs;
- configuring the hatching substrate 3 in the hatching condition, wherein the hatching substrate 3 is separated from the transport container 2 and is moreover placed outside and in a position independent of that of the transport container 2 itself pending hatching.

The process can comprise a preliminary incubation step, wherein the eggs are prepared in an incubator (in a special incubation tray) for a predetermined time which precedes transport to the farm for hatching of the eggs.

Following incubation, the process comprises a step of positioning the eggs in the respective hatching substrates 3 (on the 18th day), each of which is positioned inside trays 2 in the transport condition.

The trays 2 are subsequently transported to the hatching place, preferably in a stacked condition, on transport trolleys.

Advantageously, the hatching substrate 3 remains inserted in the transport container 2 during the steps of transport from the incubators to the rearing shed in which hatching takes place.

Furthermore, the method provides for each hatching substrate 3 to be removed from the respective transport container 2 directly, when the latter is still stacked, and for the hatching substrate 3 to be placed on the ground.

Advantageously, in this manner, the trays can be transported outside the shed, still stacked, by means of the transport trolley.

At the end of this process, the hatching substrates are removed as disposable material together with the eggshell residues.

The present invention makes it possible to achieve the advantages already mentioned above and summarised here below:
- The device and process of the present invention enable eggs to be transported to a farm by means of a single tray, with an increase in logistical efficiency of about 20%;
- In particular, as is well known, the use of a same tray enables the strengthening of the digestive and immune system of chicks born on a farm, especially those born from "first hatching eggs", so as to have a more robust chick;
- Furthermore, the structure of the substrate enables maximum flexibility of internal automation to be obtained (the honeycomb structure thus conceived makes it possible internally to continue using the present automations and in several hatcheries);
- Furthermore, greater biosafety is ensured due to the nature of the "disposable" cardboard substrate, since all the cardboard is biodegradable;
- The invention makes it possible to eliminate the operations of transporting chicks from a hatchery to farms and to eliminate stays of chicks in hatcheries to allow complete loading of the vehicle;
- In addition, the possibility of watering and feeding chicks from the first moment after birth is ensured;
- Furthermore, the substrate extracted from the tray enables greater space to be obtained right from the moment of hatching, with smaller concentrations of contaminants (greater volume), since the chicks are born on the floor in the shed.

## Claims

1. A device (1) for transporting and hatching eggs on a farm, comprising:
- a transport container (2);
- a hatching substrate (3) associated with said transport container (2) and configurable between a transport condition, wherein said hatching substrate (3) is inserted in said transport container (2), and a hatching condition, wherein said hatching substrate (3) is separated from said transport container (2) and placed outside in a position independent of that of said transport container (2); said hatching substrate (3) comprising eggs retaining means (4) shaped so as to maintain the eggs arranged in said transporting and hatching device (1) in a substantially stable position; wherein said transport container (2) comprises a base (21) on which said hatching substrate (3) may be positioned and at least one lateral wall (22) transversal to said base (21); said lateral wall (22) surrounding said base (21);
**characterised in that** said transport container (2) has at least one lateral passage opening (23) defined by a window fashioned in said lateral wall for a sliding movement of said hatching substrate (3) at least between the transport condition and the hatching condition through said lateral passage opening.

2. The device (1) according to claim 1, wherein said retaining means (4) is shaped so as to keep the eggs disposed in said transporting and hatching device (1) in an at least partially horizontal position, with reference to a main axis of extension of the egg itself relative to a vertical direction (V).

3. The device (1) according to claim 1 or 2, wherein said retaining means (4) comprises a plurality of housing seats (5) for the eggs, wherein each seat (5) is defined at least in part by one or more partitions (6) that rise from the hatching substrate (3).

4. The device (1) according to claim 3 when it depends on claim 2, wherein each housing seat (5) has a height that is less than a maximum diameter of an egg measured transversely to the main axis of extension of the egg itself.

5. The device (1) according to claim 3 or 4, wherein said partitions (6) are shaped so as to define closed housing seats (5) along a direction substantially parallel to the substrate and substantially honeycomb shaped.

6. The device (1) according to claim 3 or 4, wherein said partitions (6) extend along said hatching substrate (3) according to an undulating pattern so as to define open housing seats (5) along a direction substantially parallel to the substrate.

7. The device (1) according to any preceding claim, wherein said transport container (2) is an open top tray wherein the base (21) has substantially a quadrilateral shape, preferably the shape of a rectangle.

8. The device (1) according to any preceding claim, wherein said hatching substrate (3) comprises at least one containing panel (31) disposed along a perimeter of the rest of said hatching substrate (3).

9. The device (1) according to any preceding claim, wherein said hatching substrate (3) comprises at least one handle (32) to facilitate the movement of the hatching substrate (3) itself between the transport condition and the hatching condition.

10. A process for transporting and hatching eggs on a farm, comprising the operating steps of:
- preparing a transport container (2) comprising a base (21) on which a hatching substrate (3) may be positioned and at least one lateral wall (22) transversal to said base (21); said lateral wall (22) surrounding said base (21); said transport container (2) has at least one lateral passage opening (23) defined by a window fashioned in said lateral wall for a sliding movement of said hatching substrate (3) at least between a transport condition and a hatching condition through said lateral passage opening;
- preparing a hatching substrate (3) in the transport condition, wherein said hatching substrate (3) is inserted in said transport container (2); said hatching substrate (3) comprising a retaining means (4) shaped so as to keep the eggs arranged in said hatching substrate (3) in a substantially stable position;
- preparing a plurality of eggs in said hatching substrate (3) configured in the transport condition so that each egg is kept in a stable position by said retaining means (4);
- transporting said hatching substrate (3) in the transport condition to a farm for hatching of the eggs;
- configuring said hatching substrate (3) in the hatching condition, wherein said hatching substrate (3) is separated from said transport container (2) and placed outside and in a position independent of that of said transport container (2) pending hatching.

11. The process according to claim 10, comprising a preliminary incubation step, wherein the eggs are positioned in an incubator; following said preliminary incubation step the eggs being positioned in the respective hatching substrates (3), each disposed in the transport condition in the transport containers (2) for the step of transporting the same hatching substrate (3) and the same container (2) to a farm for hatching.

12. The process according to claim 11, **characterised in that** following said preliminary incubation step, the containers (2) with the respective hatching substrates (3) containing the eggs are stacked one on top of the other in order to carry out said step of transport to the farm; said step of configuring said hatching substrate (3) in a hatching condition provides for each hatching substrate (3) to be extracted by sliding from the respective stacked containers (2) and positioned on the ground for hatching.

## Patentansprüche

1. Vorrichtung (1) zum Transportieren und Brüten von Eiern auf einem Bauernhof, umfassend:
- einen Transportbehälter (2);
- ein mit dem Transportbehälter (2) assoziiertes Brutsubstrat (3), das zwischen einem Transportzustand, in dem das Brutsubstrat (3) in den Transportbehälter (2) eingesetzt ist, und einem Brutzustand, in dem das Brutsubstrat (3) vom Transportbehälter (2) getrennt, und nach außen in einer Position unabhängig von der des Transportbehälters (2) platziert ist, konfigurierbar ist; wobei das Brutsubstrat (3) Eierrückhaltemittel (4) umfasst, die so geformt sind, dass sie die in der Transport- und Brutvorrichtung (1) angeordneten Eier in einer im Wesentlichen stabilen Position halten;
wobei der Transportbehälter (2) eine Basis (21), auf der das Brutsubstrat (3) positioniert werden kann, und mindestens eine Seitenwand (22) quer zur Basis (21) umfasst; wobei die Seitenwand (22) die Basis (21) umgibt; **dadurch gekennzeichnet, dass** der Transportbehälter (2) mindestens eine seitliche Durchgangsöffnung (23) aufweist, die durch ein in der Seitenwand ausgebildetes Fenster für eine Gleitbewegung des Brutsubstrats (3) zumindest zwischen dem Transportzustand und dem Brutzustand durch die seitliche Durchgangsöffnung definiert ist.

2. Vorrichtung (1) nach Anspruch 1, wobei die Rückhaltemittel (4) so geformt sind, dass sie die in der Transport- und Brutvorrichtung (1) angeordneten Eier in einer zumindest teilweise horizontalen Position in Bezug auf eine Hauptausdehnungsachse des Eis relativ zu einer vertikalen Richtung (V) halten.

3. Vorrichtung (1) nach Anspruch 1 oder 2, wobei die Rückhaltemittel (4) eine Vielzahl an Aufnahmesitzen (5) für die Eier umfassen, wobei ein jeder Sitz (5) zumindest teilweise durch eine oder mehrere Trennwände (6), die aus dem Brutsubstrat (3) aufsteigen, definiert ist.

4. Vorrichtung (1) nach Anspruch 3, wenn dieser von Anspruch 2 abhängig ist, wobei ein jeder Aufnahmesitz (5) eine Höhe aufweist, die kleiner ist als ein quer zur Hauptausdehnungsachse des Eis selbst gemessener maximaler Durchmesser eines Eis.

5. Vorrichtung (1) nach Anspruch 3 oder 4, wobei die Trennwände (6) so geformt sind, dass sie geschlossene Aufnahmesitze (5) entlang einer Richtung im Wesentlichen parallel zum Substrat und im Wesentlichen wabenförmig definieren.

6. Vorrichtung (1) nach Anspruch 3 oder 4, wobei sich die Trennwände (6) entlang des Brutsubstrats (3) gemäß einem wellenförmigen Muster erstrecken, um offene Aufnahmesitze (5) entlang einer Richtung im Wesentlichen parallel zum Substrat zu definieren.

7. Vorrichtung (1) nach einem der vorhergehenden Ansprüche, wobei es sich beim Transportbehälter (2) um eine offene obere Schale handelt, wobei die Basis (21) im Wesentlichen eine vierseitige Form aufweist, vorzugsweise die Form eines Rechtecks.

8. Vorrichtung (1) nach einem der vorhergehenden Ansprüche, wobei das Brutsubstrat (3) mindestens ein enthaltendes Paneel (31) umfasst, das entlang eines Umfangs des Rests des Brutsubstrats (3) angeordnet ist.

9. Vorrichtung (1) nach einem der vorhergehenden Ansprüche, wobei das Brutsubstrat (3) mindestens einen Griff (32) umfasst, um die Bewegung des Brutsubstrats (3) zwischen dem Transportzustand und dem Brutzustand zu erleichtern.

10. Verfahren zum Transportieren und Brüten von Eiern auf einem Bauernhof, umfassend die Arbeitsschritte:
- Vorbereiten eines Transportbehälters (2) umfassend eine Basis (21), auf der ein Brutsubstrat (3) positioniert werden kann, und mindestens eine Seitenwand (22) quer zur Basis (21); wobei die Seitenwand (22) die Basis (21) umgibt; der Transportbehälter (2) weist mindestens eine seitliche Durchgangsöffnung (23) auf, die durch ein in der seitlichen Wand ausgebildetes Fenster für eine Gleitbewegung des Brutsubstrats (3) mindestens zwischen einem Transportzustand und einem Brutzustand durch die seitliche Durchgangsöffnung definiert ist;
- Vorbereiten eines Brutsubstrats (3) im Transportzustand, wobei das Brutsubstrat (3) in den Transportbehälter (2) eingesetzt wird; wobei das Brutsubstrat (3) Rückhaltemittel (4) umfasst, die so geformt sind, dass sie die in dem Brutsubstrat (3) angeordneten Eier in einer im Wesentlichen stabilen Position halten;
- Vorbereiten einer Vielzahl an Eiern im Brutsubstrat (3), das im Transportzustand konfiguriert ist, so dass ein jedes Ei durch die Rückhaltemittel (4) in einer stabilen Position gehalten wird;
- Transportieren des Brutsubstrats (3) im Transportzustand auf einen Bauernhof zum Brüten der Eier;
- Konfigurieren des Brutsubstrats (3) im Brutzustand, wobei das Brutsubstrat (3) vom Transportbehälter (2) getrennt ist und nach außen und in einer Position unabhängig von der des Transportbehälters (2) anstehend zum Brüten platziert wird.

11. Verfahren nach Anspruch 10, umfassend einen vorläufigen Inkubationsschritt, wobei die Eier in einem Inkubator positioniert werden; nach dem vorläufigen Inkubationsschritt werden die Eier in den jeweiligen Brutsubstraten (3) positioniert, wobei ein jedes im Transportzustand in den Transportbehältern (2) für den Schritt zum Transportieren des gleichen Brutsubstrats (3) und des gleichen Behälters (2) auf einen Bauernhof zum Brüten angeordnet ist.

12. Verfahren nach Anspruch 11, **dadurch gekennzeichnet, dass** nach dem vorläufigen Inkubationsschritt die Behälter (2) mit den jeweiligen Brutsubstraten (3), die die Eier enthalten, übereinander gestapelt werden, um den Transportschritt auf den Bauernhof auszuführen; wobei der Schritt zum Konfigurieren des Brutsubstrats (3) in einem Brutzustand vorsieht, dass ein jedes Brutsubstrat (3) durch Gleiten aus den jeweiligen gestapelten Behältern (2) herausgezogen und zum Brüten auf dem Boden positioniert wird.

## Revendications

1. Dispositif (1) de transport et d'éclosion d'œufs dans une ferme, comprenant :
- un récipient de transport (2) ;
- un substrat d'éclosion (3) associé audit récipient de transport (2) et configurable entre une condition de transport, dans laquelle ledit substrat d'éclosion (3) est introduit dans ledit récipient de transport (2), et une condition d'éclosion, dans laquelle ledit substrat d'éclosion (3) est séparé dudit récipient de transport (2) et placé à l'extérieur dans une position indépendante de celle dudit récipient de transport (2) ; ledit substrat d'éclosion (3) comprenant des moyens de retenue (4) des œufs formés de manière à maintenir les œufs disposés dans ledit dispositif de transport et d'éclosion (1) dans une position substantiellement stable ;
dans lequel ledit récipient de transport (2) comprend une base (21) sur laquelle ledit substrat d'éclosion (3) peut être positionné et au moins une paroi latérale (22) transversale à ladite base (21) ; ladite paroi latérale (22) entourant ladite base (21) ;
**caractérisé en ce que** ledit récipient de transport (2) comporte au moins une ouverture de passage latérale (23) définie par une fenêtre façonnée dans ladite paroi latérale pour un mouvement de coulissement dudit substrat d'éclosion (3) au moins entre la condition de transport et la condition d'éclosion à travers ladite ouverture de passage latérale.

2. Dispositif (1) selon la revendication 1, dans lequel lesdits moyens de retenue (4) sont formés de manière à maintenir les œufs disposés dans ledit dispositif de transport et d'éclosion (1) dans une position au moins partiellement horizontale, en référence à un axe principal d'extension de l'œuf lui-même par rapport à une direction verticale (V).

3. Dispositif (1) selon la revendication 1 ou 2, dans lequel lesdits moyens de retenue (4) comprennent une pluralité de sièges de logement (5) pour les œufs, dans lequel chaque siège (5) est défini au moins en partie par une ou plusieurs cloisons (6) qui s'élèvent du substrat d'éclosion (3).

4. Dispositif (1) selon la revendication 3 lorsqu'elle dépend de la revendication 2, dans lequel chaque siège de logement (5) a une hauteur étant inférieure à un diamètre maximal d'un œuf mesuré transversalement à l'axe principal d'extension de l'œuf lui-même.

5. Dispositif (1) selon la revendication 3 ou 4, dans lequel lesdites cloisons (6) sont formées de manière à définir des sièges de logement fermés (5) le long d'une direction substantiellement parallèle au substrat et substantiellement en forme de nid d'abeille.

6. Dispositif (1) selon la revendication 3 ou 4, dans lequel lesdites cloisons (6) se prolongent le long dudit substrat d'éclosion (3) selon un motif ondulé de manière à définir des sièges de logement ouverts (5) le long d'une direction substantiellement parallèle au substrat.

7. Dispositif (1) selon l'une quelconque des revendications précédentes, dans lequel ledit récipient de transport (2) est un plateau à dessus ouvert dans lequel la base (21) a substantiellement une forme quadrilatérale, de préférence la forme d'un rectangle.

8. Dispositif (1) selon l'une quelconque des revendications précédentes, dans lequel ledit substrat d'éclosion (3) comprend au moins un panneau de contenance (31) disposé le long d'un périmètre du reste dudit substrat d'éclosion (3).

9. Dispositif (1) selon l'une quelconque des revendications précédentes, dans lequel ledit substrat d'éclosion (3) comprend au moins une poignée (32) pour faciliter le déplacement du substrat d'éclosion (3) lui-même entre la condition de transport et la condition d'éclosion.

10. Procédé de transport et d'éclosion d'œufs dans une ferme, comprenant les étapes fonctionnelles de :
- préparer un récipient de transport (2) comprenant une base (21) sur laquelle un substrat d'éclosion (3) peut être positionné et au moins une paroi latérale (22) transversale à ladite base (21) ; ladite paroi latérale (22) entourant ladite base (21) ; ledit récipient de transport (2) comporte au moins une ouverture de passage latérale (23) définie par une fenêtre façonnée dans ladite paroi latérale pour un mouvement de coulissement dudit substrat d'éclosion (3) au moins entre une condition de transport et une condition d'éclosion à travers ladite ouverture de passage latérale ;
- préparer un substrat d'éclosion (3) dans la condition de transport, où ledit substrat d'éclosion (3) est introduit dans ledit récipient de transport (2) ; ledit substrat d'éclosion (3) comprenant des moyens de retenue (4) façonnés de manière à maintenir les œufs disposés dans ledit substrat d'éclosion (3) dans une position substantiellement stable ;
- préparer une pluralité d'œufs dans ledit substrat d'éclosion (3) configuré dans la condition de transport de sorte que chaque œuf est maintenu dans une position stable par lesdits moyens de retenue (4) ;
- transporter ledit substrat d'éclosion (3) dans la condition de transport vers une ferme pour l'éclosion des œufs ;
- configurer ledit substrat d'éclosion (3) dans la condition d'éclosion, où ledit substrat d'éclosion (3) est séparé dudit récipient de transport (2) et placé à l'extérieur et dans une position indépendante de celle dudit récipient de transport (2) en attendant l'éclosion.

11. Procédé selon la revendication 10, comprenant une étape d'incubation préliminaire, dans lequel les œufs sont positionnés dans un incubateur ; après ladite étape d'incubation préliminaire, les œufs sont positionnés dans les substrats d'éclosion (3) respectifs, chacun étant disposé dans la condition de transport dans les récipients de transport (2) pour l'étape de transport du même substrat d'éclosion (3) et du même récipient (2) vers une ferme pour l'éclosion.

12. Procédé selon la revendication 11, **caractérisé en ce que**, après ladite étape d'incubation préliminaire, les récipients (2) avec les substrats d'éclosion (3) respectifs contenant les œufs sont empilés l'un sur l'autre afin d'effectuer ladite étape de transport vers la ferme ; ladite étape de configuration dudit substrat d'éclosion (3) dans une condition d'éclosion prévoit que chaque substrat d'éclosion (3) soit extrait par coulissement des récipients empilés (2) respectifs et positionné sur le sol pour l'éclosion.
